# EUROPÄISCHE PATENTSCHRIFT

(11) **EP 2 495 450 B1**
(45) Veröffentlichungstag und Bekanntmachung des Hinweises auf die Patenterteilung: **15.05.2013**
(21) Anmeldenummer: 11001685.4
(22) Anmeldetag: 01.03.2011
(51) Int. Cl.: F15B 15/06

(54) **Fluidbetätigte Drehantriebsvorrichtung**
Fluid-actuated rotary drive
Dispositif d'entraînement rotatif hydraulique

(43) Veröffentlichungstag der Anmeldung: 05.09.2012
(73) Patentinhaber: FESTO AG & Co. KG, 73734 Esslingen (DE)
(72) Erfinder: Diener, Ulrich, 73732 Esslingen (DE); Bitzer, Jörg, 73733 Esslingen (DE); Gückel, Jürgen, 70794 Filderstadt (DE); Yigit, Hava, 73061 Ebersbach (DE)
(74) Vertreter: Abel, Martin

(56) Entgegenhaltungen:
- EP-A1- 2 093 432
- JP-A- 2007 127 160
- JP-A- 2007 333 130

## Beschreibung

Die Erfindung betrifft eine fluidbetätigte Drehantriebsvorrichtung, mit einem sich längs einer Hauptachse erstreckenden Antriebsgehäuse, in dem zwei durch eine Zwischenwand voneinander getrennte längliche Räume mit zu der Hauptachse parallelen Längsachsen nebeneinander angeordnet sind, von denen mindestens einer einen Antriebsraum bildet, in dem eine durch gesteuerte Fluidbeaufschlagung linear verschiebbare Antriebseinheit angeordnet ist, die an ihrer der Zwischenwand zugewandten Längsseite eine Antriebsverzahnung aufweist, und mit einer um eine zu der Hauptachse rechtwinkelige Drehachse relativ zu dem Antriebsgehäuse drehbaren Abtriebseinheit, die einen im Innern des Antriebsgehäuses mit der Antriebsverzahnung der mindestens einen Antriebseinheit in Verzahnungseingriff stehenden Abtriebszahnkranz aufweist und die an einem sie umschließenden Lagerring drehbar gelagert ist, der mit einer Montagefläche voraus an eine in Achsrichtung der Drehachse orientierte erste Außenfläche des Antriebsgehäuses angesetzt und durch mindestens eine Befestigungsschraube mit dem Antriebsgehäuse verspannt ist.

Eine aus der EP 2 093 432 A1 bekannte Drehantriebsvorrichtung dieser Art ist mit einer zu einer Drehbewegung antreibbaren Abtriebseinheit ausgestattet, die unter Zwischenschaltung einer Anordnung von Wälzelementen an einem Lagerring drehgelagert ist, der seinerseits an eine erste Außenfläche eines Antriebsgehäuses angesetzt ist und durch mehrere Befestigungsschrauben an dem Antriebsgehäuse befestigt ist. Die Befestigungsschrauben sind ähnlich einer Flanschverbindung von der dem Antriebsgehäuse abgewandten Seite her durch den Lagerring hindurchgesteckt und in Gewindebohrungen eingeschraubt, die um die Abtriebseinheit herum im Antriebsgehäuse ausgebildet sind. Ein Nachteil einer solchen Bauweise besteht darin, dass der Lagerring zur Aufnahme der Schraubenköpfe der Befestigungsschrauben relativ breit auszuführen ist, was einer Verringerung der Baugröße der Drehantriebsvorrichtung entgegensteht.

Eine vergleichbare Situation liegt bei einer aus der JP 2007127160 A bekannten Drehantriebseinrichtung vor.

Bei einer aus der DE 19803819 B4 bekannten Drehantriebsvorrichtung ist die Abtriebseinheit ausschließlich durch zwei separate Wälzlager am Antriebsgehäuse gelagert, die im Innern des Antriebsgehäuses untergebracht sind. Diese Art der Lagerung ist zwar platzsparend, hat aber den Nachteil, dass die Lagereinrichtungen nur schwer zugänglich und nur mit größerem Aufwand montierbar und demontierbar sind.

Der Erfindung liegt die Aufgabe zugrunde, eine Drehantriebsvorrichtung der eingangs genannten Art zu schaffen, deren Abtriebseinheit einfach und platzsparend drehgelagert ist.

Zur Lösung dieser Aufgabe ist erfindungsgemäß vorgesehen, dass die mindestens eine Befestigungsschraube ausschließlich im Bereich der Zwischenwand außerhalb beider länglichen Räume von einer der ersten Außenfläche entgegengesetzten zweiten Außenfläche des Antriebsgehäuses her durch das Antriebsgehäuse hindurchgreift, wobei sie sich mit einem Schraubenkopf von der der ersten Außenfläche entgegengesetzten Seite her an dem Antriebsgehäuse abstützt und mit einem Gewindeschaft von der Montagefläche her in eine zu der Montagefläche hin offene Gewindebohrung des Lagerringes eingeschraubt ist.

Da sich bei einer derartigen Ausgestaltung der Drehantriebsvorrichtung der Schraubenkopf jeder Befestigungsschraube im Bereich der dem Lagerring entgegengesetzten Seite des Antriebsgehäuses befindet, bei der es sich regelmäßig um die Unterseite des Antriebsgehäuses handeln wird, lässt sich die Baubreite des Lagerringes erheblich reduzieren. Im Lagerring selbst werden keine Ausnehmungen benötigt, um Schraubenköpfe von Befestigungsschrauben unterbringen zu können. Somit kann der Lagerring über einen relativ kleinen Außendurchmesser verfügen, ohne die Tragfähigkeit zu beeinträchtigen. Indem sich die Befestigungsmaßnahmen außerdem auf den zwischen den beiden länglichen Räumen liegenden Bereich der Zwischenwand konzentrieren, können die äußeren Wände des Antriebsgehäuses ohne Berücksichtigung von Befestigungsmaßnahmen ausgebildet werden, so dass sich ein Antriebsgehäuse mit schmaler Bauweise verwirklichen lässt.

Vorteilhafte Weiterbildungen der Erfindung gehen aus den Unteransprüchen hervor.

Zweckmäßigerweise ist jeder der beiden länglichen Räume als Antriebsraum ausgebildet, in dem eine durch gesteuerte Fluidbeaufschlagung linear verschiebbare Antriebseinheit angeordnet ist, die an ihrer der Zwischenwand zugewandten Längsseite eine Antriebsverzahnung aufweist. In diesem Fall stehen beide Antriebseinheiten gleichzeitig mit dem Abtriebszahnkranz in Verzahnungseingriff, indem selbiger zweckmäßigerweise zwischen die beiden Antriebseinheiten eingreift. Auf diese Weise lässt sich ein besonders hohes Drehmoment an der Abtriebseinheit hervorrufen.

Jede zur gehäusefesten Fixierung des Lagerringes vorhandene Befestigungsschraube ist zweckmäßigerweise so ausgebildet, dass sie die zwischen den beiden Antriebsräumen befindliche Zwischenwand durchsetzt. Auf diese Weise kann zuverlässig gewährleistet werden, dass die Befestigungsmaßnahmen sich nicht auf die Dichtheit des mindestens einen mit Fluid zu beaufschlagenden Antriebsraumes auswirkt.

Vorzugsweise ist der Lagerring mit lediglich zwei Befestigungsschrauben am Antriebsgehäuse fixiert, wobei diese beiden Befestigungsschrauben auf einander diametral entgegengesetzten Umfangsseiten des Abtriebszahnkranzes angeordnet sind. Die Befestigungsschrauben sind dadurch an einander mit Bezug zur Drehachse diametral beabstandeten und gegenüberliegenden Bereichen mit dem Lagerring verschraubt, was eine optimale Fixierung gewährleistet.

Zweckmäßigerweise greift jede Befestigungsschraube durch einen das Antriebsgehäuse in Achsrichtung der Drehachse durchsetzenden individuellen Schraubenaufnahmekanal hindurch. Es ist von Vorteil, wenn die Zwischenwand des Antriebsgehäuses von zwei derartigen Schraubenaufnahmekanälen durchsetzt ist, in denen sich jeweils eine Befestigungsschraube erstreckt und die auf einander mit Bezug zur Drehachse diametral entgegengesetzten Seiten des Abtriebszahnkranzes platziert sind. Der Abstand der beiden Schraubenaufnahmekanäle von der Drehachse der Abtriebseinheit ist zweckmäßigerweise identisch.

Die Montagemöglichkeiten der Drehantriebsvorrichtung an einer Haltestruktur bleiben gänzlich unbeeinträchtigt, wenn der Schraubenkopf jeder Befestigungsschraube komplett versenkt im Antriebsgehäuse aufgenommen ist. Ein zur Aufnahme einer Befestigungsschraube dienender Schraubenaufnahmekanal verfügt zweckmäßigerweise über eine endseitige Erweiterung, die zur zweiten Außenfläche hin offen ist und die den zugeordneten Schraubenkopf zur Gänze aufnimmt.

Es ist von Vorteil, wenn die mindestens eine im Lagerring ausgebildete und zum Einschrauben einer Befestigungsschraube dienende Gewindebohrung nach Art eines Sackloches ausgebildet ist, so dass sie an der der Montagefläche entgegengesetzten äußeren Stirnfläche des Lagerringes nicht ausmündet. Auf diese Weise lässt sich ein nach außen hin unperforierter und daher wenig verschmutzungsanfälliger Lagerring realisieren. Außerdem verfügt ein nicht gänzlich durchbrochener Lagerring über eine besonders hohe Struktursteifigkeit und verhindert ein Eindringen von Verunreinigungen ins Innere des Antriebsgehäuses.

Zweckmäßigerweise ist der Lagerring mit zumindest einem Teil seiner Höhe in eine im Bereich der ersten Außenfläche des Antriebsgehäuses ausgebildete Zentrierausnehmung eingesetzt und darin in bezüglich der Drehachse radialer Richtung bevorzugt allseits abgestützt. Auf den Lagerring einwirkende Querkräfte werden somit unmittelbar in das Antriebsgehäuse eingeleitet und führen zu keinen nennenswerten Belastungen der Schraubverbindungen. Die mindestens eine Befestigungsschraube ist somit im Wesentlichen nur dafür erforderlich, den Lagerring in Achsrichtung der Drehachse am Antriebsgehäuse festzuhalten. Für die Querabstützung quer zu der Drehachse ist das Antriebsgehäuse zuständig. Auf diese Weise kann mit einer sehr geringen Anzahl von Befestigungsschrauben, beispielsweise mit nur einer Befestigungsschraube oder mit nur zwei Befestigungsschrauben, eine sichere Fixierung des Lagerringes am Antriebsgehäuse gewährleistet werden.

Eine besonders zuverlässige Zentrierung ist gegeben, wenn der Lagerring in zumindest seinem in die Zentrierausnehmung eintauchenden Bereich über eine kreiszylindrische Außenumfangsfläche verfügt und die die Zentrierausnehmung umfangsseitig begrenzende Seitenwand eine hierzu komplementäre Innenkontur hat.

Wenn es aufgrund bestimmter Anwendungsumstände erforderlich sein sollte, ein Eindringen flüssiger oder gasförmiger Verunreinigungen ins Innere des Antriebsgehäuses zu verhindern, kann der Lagerring an seiner radial nach außen orientierten Außenumfangsfläche mit mindestens einer Aufnahmenut versehen sein, in die ein Dichtungsring einsetzbar oder eingesetzt ist, der dichtend mit der die Zentrierausnehmung umfangsseitig begrenzenden Seitenwand zusammenarbeitet.

Die Zentrierausnehmung verfügt zweckmäßigerweise über eine der Montagefläche gegenüberliegende Grundfläche, an der sich der Lagerring mit seiner Montagefläche abstützen kann. Soweit die mindestens eine Befestigungsschraube durch einen Schraubenaufnahmekanal hindurchgreift, ist selbiger zweckmäßigerweise so angeordnet, dass er im Bereich der ersten Außenfläche des Antriebsgehäuses zu der Grundfläche der Zentrierausnehmung ausmündet.

Bei einer besonders vorteilhaften Ausführungsform der Drehantriebsvorrichtung bilden die Abtriebseinheit und der Lagerring eine selbsttragende und fest zusammengefügte Baugruppe, die als Abtriebsbaugruppe bezeichnet sei. Diese Abtriebsbaugruppe kann im vormontierten Zustand als Baueinheit an dem Antriebsgehäuse montiert werden, wobei zwischen der Abtriebseinheit und dem Lagerring eine derartige Verbindung vorliegt, dass die Abtriebseinheit allein durch den mit dem Antriebsgehäuse verspannten Lagerring axial unbeweglich am Antriebsgehäuse fixiert ist. Mithin lässt sich die Abtriebsbaugruppe nach dem Lösen der mindestens einen Befestigungsschraube auch als Einheit wieder vom Antriebsgehäuse abnehmen, was etwaige Wartungs- und Reparaturarbeiten sehr vereinfacht.

Den Zusammenhalt zwischen der Abtriebseinheit und dem Lagerring gewährleisten zweckmäßigerweise zwischen den beiden Komponenten angeordnete Lagermittel, die insbesondere in Form von Wälzlagermitteln ausgebildet sind und die eine formschlüssige Verbindung zwischen den beiden Komponenten zur Verfügung stellen.

Man kann auch sagen, dass die Abtriebsbaugruppe mit zumindest einem Teil ihrer Länge patronenartig in das Antriebsgehäuse einsetzbar ist und dementsprechend auch sehr einfach wieder durch umgekehrten Bewegungsablauf herausgezogen werden kann.

Für die Abtriebseinheit empfiehlt sich insbesondere ein Aufbau, bei dem sie einen von dem Lagerring konzentrisch umschlossenen, außen insbesondere kreisrunden Abtriebsteller aufweist, der über mindestens eine Befestigungsschnittstelle verfügt, an der sich eine zu einer Drehbewegung anzutreibende Komponente fixieren lässt. Dieser Abtriebsteller ist zweckmäßigerweise einstückig mit einer Abtriebswelle verbunden, die sich in Achsrichtung der Drehachse von dem Abtriebsteller weg erstreckt und die im Bereich der Zwischenwand zwischen die beiden Antriebseinheiten hineinragt. Die Abtriebswelle trägt dabei den Abtriebszahnkranz, welcher vorzugsweise einstückig an die Abtriebswelle angeformt ist. Insgesamt besteht die Möglichkeit, den Abtriebsteller, die Abtriebswelle und den Abtriebszahnkranz in Form eines einstückigen Bauteils zu realisieren, das sich kostengünstig herstellen und montieren lässt.

Für den Aufbau der Antriebseinheiten empfiehlt sich zweckmäßigerweise das Vorsehen stirnseitiger Kopfabschnitte und eines sich zwischen den beiden Kopfabschnitten erstreckenden, eine Antriebsverzahnung tragenden Zahnstangenabschnittes. Jede Antriebsverzahnung ist vorzugsweise zahnstangenartig mit linearer Erstreckung ausgebildet und angeordnet.

Nachfolgend wird die Erfindung anhand der beiliegenden Zeichnung näher erläutert. In dieser zeigen:

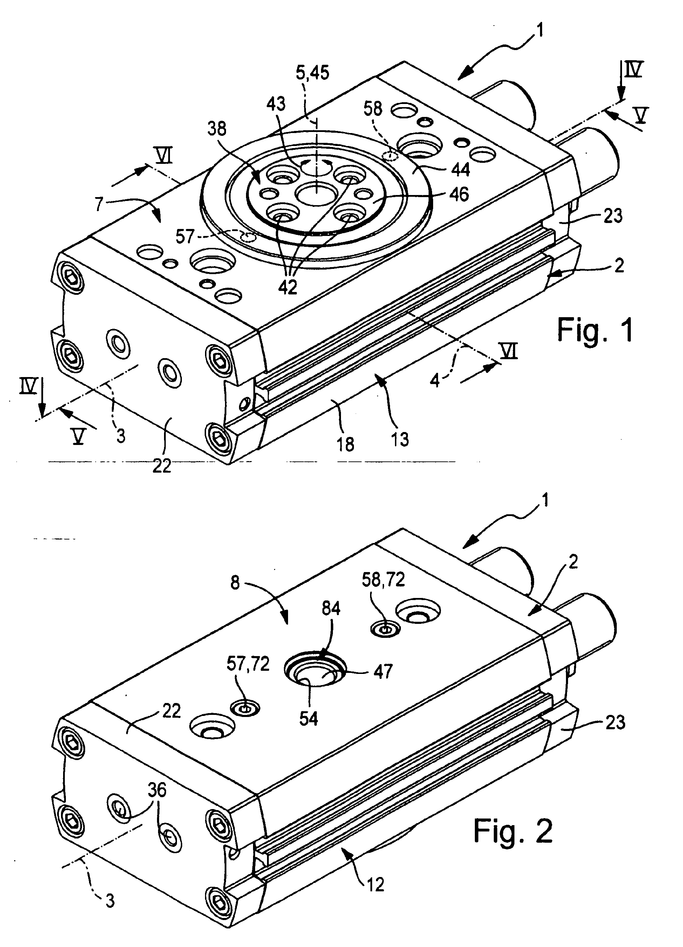

- Figur 1: eine bevorzugte Ausführungsform der erfindungsgemäßen Drehantriebsvorrichtung in einer perspektivischen Außenansicht mit Blick auf die erste Außenfläche des Antriebsgehäuses,
- Figur 2: die Drehantriebsvorrichtung aus Figur 1 in einer Unteransicht mit Blick auf die zweite Außenfläche des Antriebsgehäuses,
- Figur 3: die Anordnung aus Figur 1 in einer Explosionsdarstellung des Antriebsgehäuses, der Abtriebsbaugruppe und den zur Fixierung der Abtriebsbaugruppe verwendeten Befestigungsschrauben,
- Figur 4: einen Längsschnitt in einer zur Drehachse der Abtriebseinheit rechtwinkeligen Ebene gemäß Schnittlinie IV-IV aus Figur 1,
- Figur 5: einen Längsschnitt durch die Drehantriebsvorrichtung in einer zur Drehachse der Abtriebseinheit parallelen Ebene und gemäß Schnittlinie V-V aus Figuren 1 und 4,

- Figur 6: einen Querschnitt durch die Drehantriebsvorrichtung im Bereich der Drehachse und gemäß Schnittlinie VI-VI aus Figuren 1, 4 und 5, und
- Figur 7: einen weiteren Querschnitt durch die Drehantriebsvorrichtung in einer bezüglich Figur 4 in Achsrichtung der Hauptachse versetzten Schnittebene gemäß Schnittlinie VII-VII aus Figuren 4 und 5.

Die in ihrer Gesamtheit mit Bezugsziffer 1 bezeichnete Drehantriebsvorrichtung ist zur Betätigung mittels Fluidkraft ausgelegt und lässt sich mittels eines fluidischen und bevorzugt gasförmigen Druckmediums antreiben. Vorzugsweise ist Druckluft als Antriebsmedium vorgesehen.

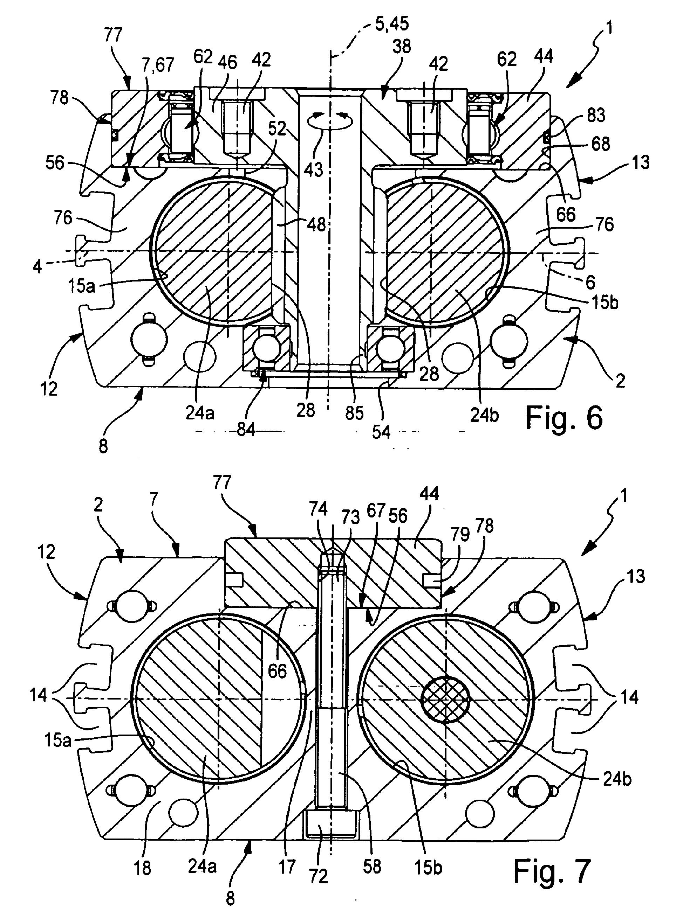

Die Drehantriebsvorrichtung 1 verfügt über ein vorzugsweise längliches und insbesondere aus Metall bestehendes Gehäuse, das als Antriebsgehäuse 2 bezeichnet sei. Es erstreckt sich entlang einer strichpunktiert angedeuteten gedachten Hauptachse 3, bei der es sich zweckmäßigerweise um die Längsachse des Antriebsgehäuses 2 handelt. In Figur 6 verläuft die Hauptachse 3 rechtwinkelig zur Zeichenebene.

Das Antriebsgehäuse 2 hat außer der Hauptachse 3 auch noch eine zu der Hauptachse 3 rechtwinkelige Querachse 4 und eine zu sowohl der Hauptachse 3 als auch der Querachse 4 rechtwinkelige Hochachse 5. Die Hauptachse 3 und die Querachse 4 spannen gemeinsam eine als Hauptebene 6 bezeichnete Ebene auf.

An seiner Außenseite verfügt das Antriebsgehäuse 2 über mehrere Außenflächen. Es weist insbesondere eine in Achsrichtung der Hochachse 5 orientierte erste Außenfläche 7 und eine diesbezüglich entgegengesetzt orientierte zweite Außenfläche 8 auf. Beim Ausführungsbeispiel bildet die erste Außenfläche 7 die Oberseite und die zweite Außenfläche 8 die Unterseite des Antriebsgehäuses 2.

Das Antriebsgehäuse 2 hat rechtwinkelig zur Hauptachse 3 zweckmäßigerweise einen länglichen Querschnitt. Es kann sich insbesondere um einen rechteckähnlichen Querschnitt handeln, dessen längere Seiten von den beiden Außenflächen 7, 8 definiert werden. Die Schmalseiten des Querschnittes sind in Achsrichtung der Querachse 4 orientiert und sind exemplarisch von zwei einander entgegengesetzten seitlichen Außenflächen 12, 13 des Antriebsgehäuses 2 gebildet, die konvex gewölbt sein können. Vorzugsweise ist in einer oder in beiden seitlichen Außenflächen mindestens eine in Achsrichtung der Hauptachse 3 verlaufende Befestigungsnut 14 ausgebildet, an der sich Zusatzkomponenten fixieren lassen. Mindestens eine Befestigungsnut 14 eignet sich zweckmäßigerweise zur Befestigung mindestens einer Positionserfassungseinrichtung, die zweckmäßigerweise mindestens einen Positionssensor aufweist.

Im Innern des Antriebsgehäuses 2 sind zwei jeweils eine Längserstreckung aufweisende, erste und zweite Räume 15a, 15b ausgebildet, die aufgrund ihrer Funktion im Folgenden auch als Antriebsräume 15a, 15b bezeichnet werden. Diese Antriebsräume 15a, 15b erstrecken sich parallel zueinander und haben jeweils eine Längsachse 16a, 16b, die parallel zu der Hauptachse 3 ausgerichtet ist.

Die beiden Antriebsräume 15a, 15b sind in Achsrichtung der Querachse 4 mit Abstand nebeneinander angeordnet und durch eine sich zwischen ihnen erstreckende, insbesondere zum Antriebsgehäuse 2 gehörende Zwischenwand 17 voneinander abgetrennt. Vorzugsweise liegen die Längsachsen 16a, 16b beider Antriebsräume 15a, 15b in der Hauptebene 6.

Insbesondere der Figur 7 ist zu entnehmen, dass jeder Antriebsraum 15a, 15b zweckmäßigerweise einen runden und vorzugsweise einen kreisrunden Querschnitt hat. Es handelt sich also zweckmäßigerweise um zylindrische und vorzugsweise um kreiszylindrische Antriebsräume 15a, 15b.

Das Antriebsgehäuse 2 setzt sich zweckmäßigerweise aus einem die beiden Antriebsräume 15a, 15b in voller Länge enthaltenden Gehäusehauptkörper 18 und zwei an die beiden in Achsrichtung der Hauptachse 3 weisenden Stirnseiten des Gehäusehauptkörpers 18 angesetzten ersten und zweiten Gehäusedeckeln 22, 23 zusammen. Letztere sind mit dem Gehäusehauptkörper 18 vorzugsweise verschraubt.

Die Zwischenwand 17 ist zweckmäßigerweise ein einstückiger Bestandteil des Gehäusehauptkörpers 18.

In jedem Antriebsraum 15a, 15b isteine Antriebseinheit 24a, 24b in Achsrichtung der zugeordneten Längsachse 16a, 16b linear verschiebbar angeordnet. Zur besseren Unterscheidung sollen diese Antriebseinheiten auch als erste Antriebseinheit 24a und als zweite Antriebseinheit 24b bezeichnet werden. Die Linearbewegung der Antriebseinheiten 24a, 24b kann durch gesteuerte Fluidbeaufschlagung mit dem weiter oben schon erwähnten Antriebsmedium hervorgerufen werden.

Jede Antriebseinheit 24a, 24b verfügt zweckmäßigerweise über zwei in Achsrichtung der Längsachse 16a, 16b mit Abstand zueinander angeordnete Kopfabschnitte 25, 26, die über einen sich zwischen ihnen erstreckenden Zahnstangenabschnitt 27 miteinander verbunden sind. Jeder Zahnstangenabschnitt 27 weist an seiner der Zwischenwand 17 zugewandten Längsseite eine insbesondere zahnstangenartig ausgebildete Antriebsverzahnung 28 auf, welche sich in der Achsrichtung der Längsachse 16a, 16b erstreckt.

Exemplarisch besteht jede Antriebsverzahnung 28 aus einer Mehrzahl von in einer gemeinsamen Ebene angeordneten und in Achsrichtung der Längsachse 16a, 16b aufeinanderfolgend angeordneten Zähnen, die sich jeweils quer und insbesondere rechtwinkelig zu der genannten Längsachse 16a, 16b erstrecken.

Die Antriebsverzahnung 28 ist zweckmäßigerweise ein einstückiger Bestandteil des Zahnstangenabschnittes 27, kann allerdings auch als separater Körper ausgebildet sein.

Jeder Kopfabschnitt 25, 26 steht über eine von ihm getragene ringförmige Dichtungsanordnung 32 in dynamischem Dichtkontakt mit der peripheren Wandung des zugeordneten Antriebsraumes 15a, 15b. Auf diese Weise wird jeder Antriebsraum 15a, 15b fluiddicht in zwei Arbeitskammern 33, 34 unterteilt, die über ein nur gestrichelt angedeutetes internes Fluidkanalsystem 35 mit zur Außenoberfläche des Antriebsgehäuses 2 ausmündenden Anschlussöffnungen 36 kommunizieren. Die Anschlussöffnungen 36 sind zum Betreiben der Drehantriebsvorrichtung 1 über nicht gezeigte Fluidleitungen unter Zwischenschaltung einer Steuerventileinrichtung mit einer das Antriebsmedium liefernden Druckquelle verbunden. Durch entsprechende Betätigung der Steuerventileinrichtung können die Arbeitskammern 33, 34 in derart aufeinander abgestimmter Weise fluidbeaufschlagt oder druckentlastet werden, dass die beiden Antriebseinheiten 24a, 24b jeweils gegensinnige Linearbewegungen ausführen.

Die Linearbewegungen der beiden Antriebseinheiten 24a, 24b werden durch Getriebemittel 37 der Drehantriebsvorrichtung 1 in eine Drehbewegung einer Abtriebseinheit 38 umgewandelt. Die Drehbewegung ist bei 43 durch einen Doppelpfeil angedeutet. Die Drehrichtung hängt von der Bewegungsrichtung der Antriebseinheiten 24a, 24b ab. Indem die Antriebseinheiten 24a, 24b zu einer hin- und hergehenden Linearbewegung angetrieben werden, lässt sich an der Abtriebseinheit 38 eine oszillierende Drehbewegung 43 abgreifen.

Abweichend vom Ausführungsbeispiel kann von den beiden zueinander parallelen länglichen Räumen 15a, 15b der Drehantriebsvorrichtung 1 auch nur einer als Antriebsraum ausgebildet und mit einer Antriebseinheit bestückt sein. In diesem Fall wird die Abtriebseinheit 38 durch nur eine Antriebseinheit angetrieben. Der andere längliche Raum kann dann leer bleiben oder für andere Zwecke genutzt werden.

Um die Drehbewegung 43 bequem abgreifen zu können, ist die Abtriebseinheit 38 zweckmäßigerweise mit mindestens einer Befestigungsschnittstelle 42 ausgestattet, die exemplarisch durch mehrere Befestigungslöcher repräsentiert wird und an der sich eine insbesondere rotativ zu bewegende externe Komponente in insbesondere lösbarer Weise befestigen lässt. Die externe Komponente ist beispielsweise eine Komponente einer zur Handhabung von Gegenständen eingesetzten Handhabungseinrichtung, beispielsweise eine Greifvorrichtung.

Die Abtriebseinheit 38 ist zur Ermöglichung ihrer Drehbewegung 43 unter Zwischenschaltung eines bezüglich ihr und bezüglich des Antriebsgehäuses 2 separaten Lagerringes 44 an dem Antriebsgehäuse 2 drehbar gelagert. Durch die Drehlagerung wird eine Drehachse 45 definiert, die zweckmäßigerweise mit der Hochachse 5 des Antriebsgehäuses 2 gleichgerichtet ist. Die Drehachse 45 verläuft somit rechtwinkelig zur Hauptachse 3 und zweckmäßigerweise auch rechtwinkelig zu der oben definierten Hauptebene 6.

Vorzugsweise verfügt die Abtriebseinheit 38 über einen im Wesentlichen scheibenförmigen Abtriebsteller 46, dessen Längsachse mit der Drehachse 45 zusammenfällt. An ihm befindet sich zweckmäßigerweise die Befestigungsschnittstelle 42.

Darüber hinaus weist die Abtriebseinheit 38 zweckmäßigerweise eine zu dem Abtriebsteller 46 koaxiale Abtriebswelle 47 auf, die drehfest und insbesondere einstückig mit dem Abtriebsteller 46 verbunden ist und die an einer Unterseite des Abtriebstellers 46 wegragt.

Die Abtriebswelle 47 trägt in konzentrischer Anordnung einen Abtriebszahnkranz 48. Der Abtriebszahnkranz 48 befindet sich am Außenumfang der Abtriebswelle 47 und erstreckt sich rings um die Abtriebswelle 47 herum. Vorzugsweise ist der Abtriebszahnkranz 48 nach Art eines Zahnrades beziehungsweise Ritzels ausgebildet. Es liegt insbesondere eine Geradverzahnung vor, wobei die Zähne des Abtriebszahnkranzes 48 jeweils parallel zur Drehachse 45 ausgerichtet sind.

Es ist zweckmäßig, wenn der Abtriebszahnkranz 48 einstückig mit der Abtriebswelle 47 verbunden ist, was beim Ausführungsbeispiel der Fall ist. Besonders kostengünstig ist eine Bauform der Abtriebseinheit 38, bei der der Abtriebsteller 46, die Abtriebswelle 47 und der Abtriebszahnkranz 48 in Form eines einzigen Bauteils ausgebildet sind.

Das Antriebsgehäuse 2 verfügt über eine Gehäuseausnehmung 52, die über eine im Folgenden zur besseren Unterscheidung als erste Ausnehmungsmündung 53 bezeichnete Mündung zur ersten Außenfläche 7 des Antriebsgehäuses 2 ausmündet. Ausgehend von dieser ersten Ausnehmungsmündung 53 erstreckt sich die Gehäuseausnehmung 52 ins Innere des Antriebsgehäuses 2 hinein, wobei sie sich zwischen den beiden Antriebsräumen 15a, 15b erstreckt. Die mit der Hochachse 5 zusammenfallende Längsachse der Gehäuseausnehmung 52 ist insbesondere so angeordnet, dass sie in der Achsrichtung der Hochachse 5 in die Zwischenwand 17 eindringt. Exemplarisch ist die Länge der Gehäuseausnehmung 52 sogar so gewählt, dass sie das Antriebsgehäuse 2 und mithin auch die Zwischenwand 17 in der Höhenrichtung vollständig durchsetzt und mit einer der ersten Ausnehmungsmündung 53 entgegengesetzten zweiten Ausnehmungsmündung 54 zur zweiten Außenfläche 8 des Antriebsgehäuses 2 ausmündet. Die Gehäuseausnehmung 52 kann an ihrem der ersten Ausnehmungsmündung 53 entgegengesetzten Endbereich allerdings auch geschlossen sein, insbesondere indem sie vor Erreichen der zweiten Außenfläche 8 nach Art eines Sackloches im Innern des Antriebsgehäuses 2 endet.

Der Querschnitt der Gehäuseausnehmung 52 ist größer als die in Achsrichtung der Querachse 4 gemessene Breite der Zwischenwand 17, so dass sie beide Antriebsräume 15a, 15b an deren einander zugewandten Längsseiten anschneidet. Es ergibt sich also durch die Gehäuseausnehmung 52 hindurch eine Querverbindung zwischen den beiden Antriebsräumen 15a, 15b.

Die Querschnittsabmessungen der Gehäuseausnehmung 52 sind allerdings so gewählt, dass sie unabhängig von der Axialposition der beiden Antriebseinheiten 24a, 24b niemals mit einer der beiden Arbeitskammern 33, 34 verbunden ist. Die Dichtungsanordnungen 32 der beiden Kopfabschnitte 25, 26 sind so weit axial zueinander beabstandet, dass eine von der Gehäuseausnehmung 52 gebildete Wanddurchbrechung 55 der Zwischenwand 17 stets zwischen den beiden mit den Dichtungsanordnungen 32 versehenen Kopfabschnitten 25, 26 jeder Antriebseinheit 24a, 24b zu liegen kommt. Auf diese Weise ist ein Fluidaustritt aus den Arbeitskammern 33, 34 in die Gehäuseausnehmung 52 hinein ausgeschlossen.

Die Abtriebseinheit 38 greift, mit ihrer Abtriebswelle 47 voraus, von der der ersten Außenfläche 7 zugeordneten Seite her in die Gehäuseausnehmung 52 ein. Der Abtriebszahnkranz 48 kommt dabei in dem zwischen den beiden Antriebseinheiten 24a, 24b angeordneten Bereich zu liegen und steht mit den Antriebsverzahnungen 28 beider Antriebseinheiten 24a, 24b in Verzahnungseingriff. Auf diese Weise ist der Abtriebszahnkranz 48 ein Bestandteil der Getriebemittel 37, wobei eine Linearbewegung der Antriebseinheiten 24a, 24b zur Folge hat, dass der Abtriebszahnkranz 48 und mithin die gesamte Abtriebseinheit 38 zu der Drehbewegung 43 um die Drehachse 45 angetrieben wird.

Wenn die Drehantriebsvorrichtung 1 mit nur einer Antriebseinheit ausgestattet ist, kämmt der Abtriebszahnkranz 48 selbstverständlich nur mit deren Antriebsverzahnung.

Im Bereich der ersten Außenfläche 7 ist die Abtriebseinheit 38 an dem Lagerring 44 drehbar gelagert, der seinerseits unbeweglich am Antriebsgehäuse 2 befestigt ist. Genauer gesagt ist der Lagerring 44 mit einer axial orientierten Montagefläche 56 voraus an die erste Außenfläche 7 des Antriebsgehäuses 2 angesetzt und durch eine oder mehrere Befestigungsschrauben 57, 58 mit dem Antriebsgehäuse 2 verspannt.

Die Montagefläche 56 ist zweckmäßigerweise eine Ringfläche und ist insbesondere von einer der beiden einander entgegengesetzt orientierten axialen Stirnflächen des Lagerringes 44 gebildet.

Der Lagerring 44 umschließt die Abtriebseinheit 38 in koaxialer Anordnung. Wenn die Abtriebseinheit 38, wie beim Ausführungsbeispiel, einen Abtriebsteller 46 aufweist, ist der Lagerring 44 vorzugsweise so angeordnet, dass er in einer gemeinsamen Ebene mit dem Abtriebsteller 46 liegt und diesen konzentrisch umschließt.

Konzentrisch zwischen dem Lagerring 44 und der Abtriebseinheit 38 beziehungsweise dem Abtriebsteller 46 sind zweckmäßigerweise Lagermittel 62 angeordnet, durch die die Abtriebseinheit 38 in radialer Richtung und vorzugsweise auch in axialer Richtung bezüglich des Lagerringes 44 derart abgestützt ist, dass sie relativ zu dem Lagerring 44 um ihre Drehachse 45 rotieren kann.

Vorzugsweise stehen die Lagermittel 62 sowohl mit dem Innenumfang des Lagerringes 44 als auch mit dem Außenumfang des Abtriebstellers 46 in formschlüssigem Eingriff. Auf diese Weise sind der Lagerring 44 und der Abtriebsteller 46 zweckmäßigerweise axial in beiden Richtungen relativ zueinander unbeweglich fixiert.

Die Lagermittel 62 sind insbesondere als Wälzlagermittel ausgebildet. In diesem Zusammenhang verfügen sie zweckmäßigerweise über mehrere radial zwischen dem Lagerring 44 und dem Abtriebsteller 46 angeordnete und kranzförmig verteilte Wälzlagerelemente 63, beispielsweise Kugeln oder Rollen, die sich bei der Drehbewegung 43 sowohl an der Abtriebseinheit 38 als auch an dem Lagerring 44 abwälzen können. Zweckmäßigerweise sind die Wälzlagerelemente 63 durch ein Käfigelement zusammengehalten.

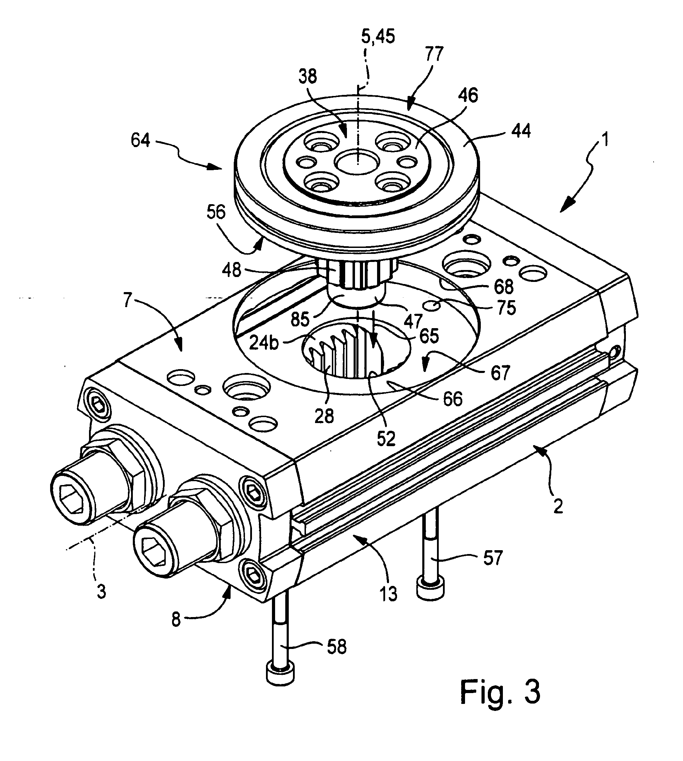

Exemplarisch sind die Lagermittel 62 so ausgebildet, dass die Abtriebseinheit 38 und der Lagerring 44 in vorteilhafter Weise zu einer selbsttragenden Abtriebsbaugruppe 64 zusammengefügt sind, die als vormontierte Baueinheit am Antriebsgehäuse 2 montierbar bzw. montiert ist. Die Figur 3 illustriert in diesem Zusammenhang sehr gut, wie die vormontierte Abtriebsbaugruppe 64 beim Zusammenbau der Drehantriebsvorrichtung 1 in einer mit der Achsrichtung der Hochachse 5 zusammenfallenden Montagerichtung 65 an die erste Außenfläche 7 des Antriebsgehäuses 2 ansetzbar ist. Bei diesem Ansetzen taucht die vorauseilende Abtriebswelle 47 durch die erste Ausnehmungsmündung 53 hindurch in die Gehäuseausnehmung 52 ein, wobei der Abtriebszahnkranz 48 mit den beiden Antriebsverzahnungen 28 der Antriebseinheiten 24a, 24b in Eingriff gelangt.

Der in der Montagerichtung 65 stattfindende Einsetzvorgang ist beendet, wenn die Abtriebsbaugruppe 64 mit der Montagefläche 56 des Lagerringes 44 an der ersten Außenfläche 7 des Antriebsgehäuses 2 zur Anlage gelangt ist.

Zweckmäßigerweise ist das Antriebsgehäuse 2 an der ersten Außenfläche 7 mit einer sich um die erste Ausnehmungsmündung 53 herum erstreckenden und zu der dem Antriebsgehäuse 2 entgegengesetzten Seite hin offenen Zentrierausnehmung 66 versehen. In diese Zentrierausnehmung 66 taucht der Lagerring 44 im montierten Zustand mit wenigstens einem Teil seiner Höhe ein, wobei er sich mit seiner Montagefläche 56 an der vom Antriebsgehäuse 2 definierten Grundfläche 67 der Zentrierausnehmung 66 axial abstützt. Peripher ist die Zentrierausnehmung 66 von einer insbesondere ringsum geschlossenen und radial orientierten Seitenwand 68 begrenzt, von der der eingesetzte Lagerring 44 an seinem Außenumfang in radialer Richtung allseits unbeweglich abgestützt wird.

Wenn der Lagerring 44, wie dies beim Ausführungsbeispiel der Fall ist, in dem in die Zentrierausnehmung 66 eingreifenden Längenabschnitt kreiszylindrisch ausgebildet ist, hat die Seitenwand 68 zweckmäßigerweise eine hierzu komplementäre kreiszylindrische Kontur.

Durch die vermittels der Seitenwand 68 erfolgende Querabstützung des Lagerringes 44 kann sich die Aufgabe der Befestigungsschrauben 57, 58 im Wesentlichen darauf beschränken, den Lagerring 44 in der Achsrichtung der Drehachse 45 mit dem Antriebsgehäuse 2 zu verspannen. Ein Vorteil der beispielhaften Drehantriebsvorrichtung 1 besteht darin, dass die Abtriebseinheit 38 ausschließlich durch den mit dem Antriebsgehäuse 2 verspannten Lagerring axial unbeweglich bezüglich des Antriebsgehäuses 2 fixiert ist.

Bei der Drehantriebsvorrichtung 1 des Ausführungsbeispiels ist der Lagerring 44 durch lediglich zwei Befestigungsschrauben 57, 58 mit dem Antriebsgehäuse 2 verspannt. Beide Befestigungsschrauben 57, 58 greifen außerhalb der beiden Antriebsräume 15a, 15b in dem zwischen den benachbarten Antriebsräumen 15a, 15b liegenden Bereich der Zwischenwand 17 von der zweiten Außenfläche 8 her durch das Antriebsgehäuse 2 hindurch, wobei sie sich jeweils mit einem Schraubenkopf 72 an der zweiten Außenfläche 8 abstützen und mit einem Gewindeschaft 73 von der Montagefläche 56 her in jeweils eine zu der Montagefläche 56 hin offene Gewindebohrung 74 des Lagerringes 44 eingeschraubt sind.

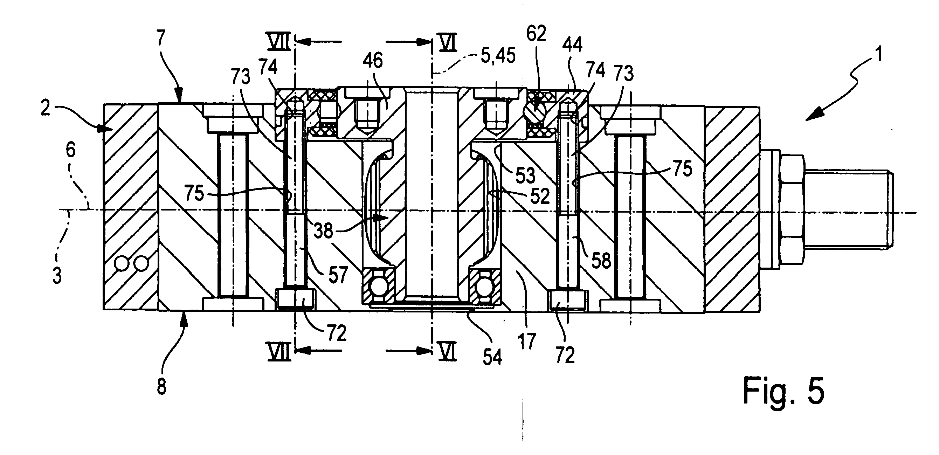

Wie insbesondere den Figuren 5 und 7 zu entnehmen ist, weist das Antriebsgehäuse 2 zweckmäßigerweise für jede Befestigungsschraube 57, 58 einen eigenen Schraubenaufnahmekanal 75 auf, der das Antriebsgehäuse 2 im Bereich der Zwischenwand 17 in Achsrichtung der Hochachse 5 durchsetzt und zu den beiden Außenflächen 7, 8 des Antriebsgehäuses 2 hin ausmündet. Jeder Schraubenaufnahmekanal 75 fluchtet axial mit einer der beim Ausführungsbeispiel vorhandenen zwei Gewindebohrungen 74 des Lagerringes 44.

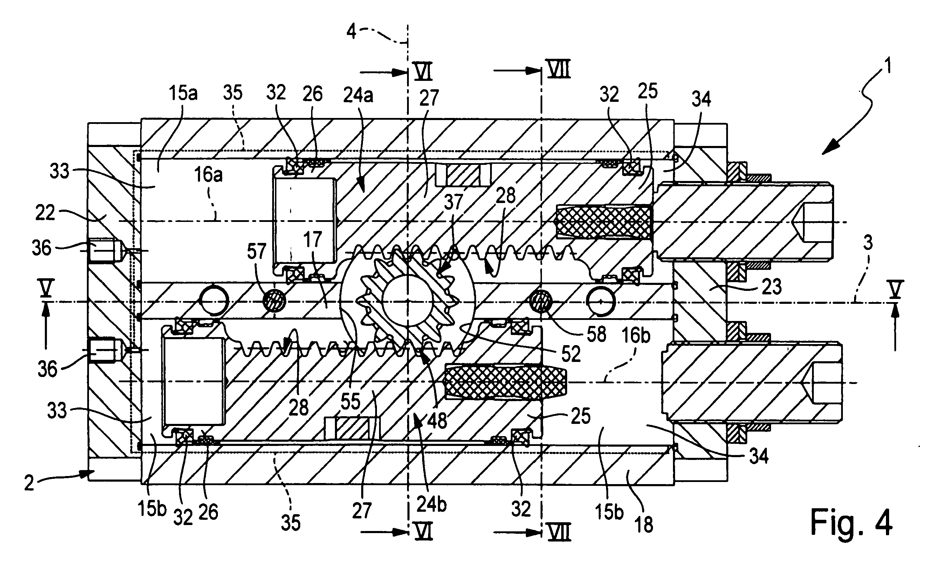

Es ist von Vorteil, wenn jede Befestigungsschraube 57, 58, wie dies beim Ausführungsbeispiel insbesondere durch die Figuren 4 und 7 vermittelt wird, die die beiden Antriebsräume 15a, 15b voneinander abtrennende Zwischenwand 17 in zu der Drehachse 45 paralleler Richtung durchsetzen.

Die Schraubbefestigung des Lagerringes 44 könnte prinzipiell auch mit nur einer einzigen Befestigungsschraube 57, 58 realisiert sein. Unabhängig von der Anzahl der Befestigungsschrauben 57, 58 ist es jedoch vorteilhaft, wenn die eine oder mehreren Befestigungsschrauben 57, 58 ausschließlich zwischen den beiden Antriebsräumen 15a, 15b im Bereich der Zwischenwand 17 angeordnet sind. Auf diese Weise konzentriert sich die Schraubbefestigung des Lagerringes 44 auf den zentralen Bereich des Antriebsgehäuses 2 und es sind keinerlei Befestigungsschrauben 57, 58 im Bereich der äußeren Wandabschnitte 76 des Antriebsgehäuses 2 vorhanden, die die Antriebsräume 15a, 15b an ihren voneinander abgewandten Längsseiten, d.h. im Bereich der seitlichen Außenflächen 12, 13 außen flankieren. Ein Vorteil hiervon ist, dass das Antriebsgehäuse 2 in Querrichtung mit einer sehr geringen Baubreite ausgeführt werden kann.

Ist der Lagerring 44 mit zwei Befestigungsschrauben 57, 58 fixiert, sind diese zweckmäßigerweise in der Achsrichtung der Hauptachse 6 mit Abstand zueinander angeordnet und liegen auf einander diametral entgegengesetzten Seiten des Abtriebszahnkranzes 48. Der Abtriebszahnkranz 48 liegt somit in Achsrichtung der Hauptachse 3 zwischen den beiden Befestigungsschrauben 57, 58 und den die Befestigungsschrauben 57, 58 aufnehmenden Schraubenaufnahmekanälen 75.

Zweckmäßigerweise ist der Schraubenkopf 72 jeder Befestigungsschraube 57, 58 komplett versenkt im Antriebsgehäuse 2 aufgenommen. Hierzu ist beim Ausführungsbeispiel jeder Schraubenaufnahmekanal 75 an seinem der zweiten Außenfläche 8 zugeordneten Endbereich im Durchmesser vergrößert, so dass der Schraubenkopf 72 eintauchen kann. Die axiale Länge des Kanalabschnittes größeren Durchmessers ist mindestens so groß wie die axiale Länge des Schraubenkopfes 72.

Mit einer derart versenkten Anordnung der Schraubenköpfe 72 kann ein durchgehend ebener Flächenabschnitt der zweiten Außenfläche 8 zur Montage der Drehantriebsvorrichtung 1 an einer nicht weiter abgebildeten Haltestruktur zur Verfügung gestellt werden.

Indem sich der mindestens eine Schraubenkopf 72 im Bereich der zweiten Außenfläche 8 befindet, kann der Ringkörper des Lagerringes 44 in radialer Richtung relativ schmal ausgebildet werden, da darin nur die mindestens eine Gewindebohrung 74 unterzubringen ist. Deren Durchmesser ist geringer als derjenige des Schraubenkopfes 72.

Die im Lagerring 44 beziehungsweise in dessen Ringkörper ausgebildeten Gewindebohrungen 74 könnten prinzipiell als axial durchgehende Durchgangsbohrung ausgebildet sein. Vor allem auch aus Gründen der Reinigungsfreundlichkeit ist es jedoch von Vorteil, wenn der Lagerring 44 an seiner der Montagefläche 56 entgegengesetzten äußeren Stirnfläche 77 durchgehend öffnungslos ausgebildet ist. Um dies zu ermöglichen, sind die Gewindebohrungen 74 beim Ausführungsbeispiel nach Art von Sacklöchern ausgebildet, die lediglich zur Montagefläche 56 hin ausmünden, zur äußeren Stirnfläche 77 des Lagerringes 44 hin jedoch durch das Material des Ringkörpers des Lagerringes 44 geschlossen sind.

Die sacklochartige Ausgestaltung der Gewindebohrungen 74 hat auch den Vorteil, dass keine flüssigen Verunreinigungen von außen her hindurchtreten und in die Gehäuseausnehmung 52 eintreten können.

Bestehen besonders hohe Ansprüche an die Abdichtqualität, kann der Lagerring 44 im Bereich seiner radial nach außen orientierten und an der Seitenwand 68 anliegenden Außenumfangsfläche 78 mit einer konzentrisch umlaufenden Aufnahmenut 79 versehen sein, in der sich ein Dichtungsring 83 platzieren lässt, welcher sowohl mit dem Lagerring 44 als auch mit der Seitenwand 68 in Dichtkontakt steht. Der Dichtungsring 83 ist in Figur 6 ersichtlich und in Figur 7 nicht dargestellt.

Wenn der Lagerring 44, insbesondere gemeinsam mit einem von ihm umschlossenen Abtriebsteller 46, in einer Zentrierausnehmung 66 untergebracht ist, ist der mindestens eine Schraubenaufnahmekanal 75 insbesondere derart platziert, dass er zu demjenigen Abschnitt der ersten Außenfläche 7 des Antriebsgehäuses 2 ausmündet, der von der Grundfläche 67 der Zentrierausnehmung 66 gebildet ist.

Um die Abtriebseinheit 38 besonders gut gegen Kippbelastungen abzustützen, kann zusätzlich zu dem Lagerring 44 eine diesbezüglich in Achsrichtung der Drehachse 45 beabstandete weitere Drehlagereinrichtung 84 vorhanden sein, die insbesondere als Wälzlagereinrichtung ausgebildet ist. Eine solche weitere Drehlagereinrichtung 84 ist beim Ausführungsbeispiel vorhanden, wobei sie sich in der Nähe der zweiten Ausnehmungsmündung 54 befindet. Auf diese Weise befindet sich in Achsrichtung der Drehachse 45 auf der einen Seite des Abtriebszahnkranzes 48 der Lagerring 44 und auf der entgegengesetzten Seite die weitere Drehlagereinrichtung 84.

Die Abtriebswelle 47 weist zweckmäßigerweise einen sich auf der dem Abtriebsteller 46 entgegengesetzten Stirnseite an den Abtriebszahnkranz 48 anschließenden Lagerfortsatz 85 auf, der koaxial in die weitere Drehlagereinrichtung 84 eingreift, welche sich am Innenumfang der Gehäuseausnehmung 52 radial abstützt.

Wenn die Abtriebsbaugruppe 64 in die Gehäuseausnehmung 52 eingesteckt wird, taucht der Lagerfortsatz 85 in die bereits im Antriebsgehäuse 2 vormontierte weitere Drehlagereinrichtung 84 ein.

## Patentansprüche

1. Fluidbetätigte Drehantriebsvorrichtung, mit einem sich längs einer Hauptachse (3) erstreckenden Antriebsgehäuse (2), in dem zwei durch eine Zwischenwand (17) voneinander getrennte längliche Räume (15a, 15b) mit zu der Hauptachse (3) parallelen Längsachsen (16a, 16b) nebeneinander angeordnet sind, von denen mindestens einer einen Antriebsraum bildet, in dem eine durch gesteuerte Fluidbeaufschlagung linear verschiebbare Antriebseinheit (24a, 24b) angeordnet ist, die an ihrer der Zwischenwand (17) zugewandten Längsseite eine Antriebsverzahnung (28) aufweist, und mit einer um eine zu der Hauptachse (3) rechtwinkelige Drehachse (45) relativ zu dem Antriebsgehäuse (2) drehbaren Abtriebseinheit (38), die einen im Innern des Antriebsgehäuses (2) mit der Antriebsverzahnung (28) der mindestens einen Antriebseinheit (24a, 24b) in Verzahnungseingriff stehenden Abtriebszahnkranz (48) aufweist und die an einem sie umschließenden Lagerring (44) drehbar gelagert ist, der mit einer Montagefläche (56) voraus an eine in Achsrichtung der Drehachse (45) orientierte erste Außenfläche (7) des Antriebsgehäuses (2) angesetzt und durch mindestens eine Befestigungsschraube (57, 58) mit dem Antriebsgehäuse (2) verspannt ist, **dadurch gekennzeichnet, dass** die mindestens eine Befestigungsschraube (57, 58) ausschließlich im Bereich der Zwischenwand (17) außerhalb beider länglichen Räume (15a, 15b) von einer der ersten Außenfläche (7) entgegengesetzten zweiten Außenfläche (8) des Antriebsgehäuses (2) her durch das Antriebsgehäuse (2) hindurchgreift, wobei sie sich mit einem Schraubenkopf (72) von der der ersten Außenfläche (7) entgegengesetzten Seite her an dem Antriebsgehäuse (2) abstützt und mit einem Gewindeschaft (73) von der Montagefläche (56) her in eine zu der Montagefläche (56) hin offene Gewindebohrung (74) des Lagerringes (44) eingeschraubt ist.

2. Drehantriebsvorrichtung nach Anspruch 1, **dadurch gekennzeichnet, dass** jeder der beiden länglichen Räume (15a, 15b) einen Antriebsraum bildet, in dem eine durch gesteuerte Fluidbeaufschlagung linear verschiebbare Antriebseinheit (24a, 24b) angeordnet ist, die an ihrer der Zwischenwand (17) zugewandten Längsseite eine Antriebsverzahnung (28) aufweist, wobei beide Antriebseinheiten (24a, 24b) mit dem Abtriebszahnkranz (48) in Verzahnungseingriff stehen.

3. Drehantriebsvorrichtung nach Anspruch 1 oder 2, **dadurch gekennzeichnet, dass** die mindestens eine Befestigungsschraube (57, 58) die Zwischenwand (17) in einer zu der Drehachse (45) parallelen Richtung durchsetzt.

4. Drehantriebsvorrichtung nach einem der Ansprüche 1 bis 3, **dadurch gekennzeichnet, dass** der Lagerring (44) mit zwei in der Achsrichtung der Hauptachse (3) zueinander beabstandeten Befestigungsschrauben (57, 58) verschraubt ist, die auf einander diametral entgegengesetzten Seiten des Abtriebszahnkranzes (48) angeordnet sind.

5. Drehantriebsvorrichtung nach einem der Ansprüche 1 bis 4, **dadurch gekennzeichnet, dass** jede Befestigungsschraube (57, 58) durch einen das Antriebsgehäuse (2) in Achsrichtung der Drehachse (45) durchsetzenden individuellen Schraubenaufnahmekanal (75) hindurchgreift.

6. Drehantriebsvorrichtung nach einem der Ansprüche 1 bis 5, **dadurch gekennzeichnet, dass** der Schraubenkopf (72) jeder Befestigungsschraube (57, 58) komplett versenkt im Antriebsgehäuse (2) aufgenommen ist.

7. Drehantriebsvorrichtung nach einem der Ansprüche 1 bis 6, **dadurch gekennzeichnet, dass** jede mit dem Gewindeschaft (73) einer Befestigungsschraube (57, 58) kooperierende Gewindebohrung (74) als an der der Montagefläche (56) entgegengesetzten äußeren Stirnfläche (77) des Lagerringes (44) geschlossenes Sackloch ausgebildet ist.

8. Drehantriebsvorrichtung nach einem der Ansprüche 1 bis 7, **dadurch gekennzeichnet, dass** der Lagerring (44) an seiner der Montagefläche (56) entgegengesetzten äußeren Stirnfläche (77) durchgehend öffnungslos ausgebildet ist.

9. Drehantriebsvorrichtung nach einem der Ansprüche 1 bis 8, **dadurch gekennzeichnet, dass** der Lagerring (44) mit zumindest einem Teil seiner Höhe in einer im Bereich der ersten Außenfläche (7) des Antriebsgehäuses (2) ausgebildeten Zentrierausnehmung (66) des Antriebsgehäuses (2) aufgenommen und durch die periphere Seitenwand (68) dieser Zentrierausnehmung (66) quer zur Achsrichtung der Drehachse (45) allseits abgestützt ist.

10. Drehantriebsvorrichtung nach Anspruch 9, **dadurch gekennzeichnet, dass** der Lagerring (44) in zumindest seinem in die Zentrierausnehmung (66) eintauchenden Bereich eine kreiszylindrische Außenumfangsfläche (78) hat und die Zentrierausnehmung (66) über eine hierzu komplementäre Innenkontur verfügt.

11. Drehantriebsvorrichtung nach Anspruch 9 oder 10, **dadurch gekennzeichnet, dass** der Lagerring (44) im Bereich seiner radial nach außen orientierten Außenumfangsfläche (78) mindestens eine Aufnahmenut (79) zur Aufnahme eines mit der Seitenwand (68) der Zentrierausnehmung (66) dichtend zusammenarbeitenden Dichtungsringes (83) aufweist.

12. Drehantriebsvorrichtung nach einem der Ansprüche 9 bis 11, **dadurch gekennzeichnet, dass** die Zentrierausnehmung (66) eine in der Achsrichtung der Drehachse (45) orientierte Grundfläche (67) aufweist, an der der Lagerring (44) mit seiner Montagefläche (56) anliegt und an der die mindestens eine Befestigungsschraube (57, 58) aus dem Antriebsgehäuse (2) austritt.

13. Drehantriebsvorrichtung nach einem der Ansprüche 1 bis 12, **dadurch gekennzeichnet, dass** die Abtriebseinheit (38) und der Lagerring (44) zu einer selbsttragenden Abtriebsbaugruppe (64) zusammengefügt sind, wobei die Abtriebseinheit (38) zweckmäßigerweise allein durch den mit dem Antriebsgehäuse (2) verspannten Lagerring (44) axial unbeweglich bezüglich des Antriebsgehäuses (2) fixiert ist.

14. Drehantriebsvorrichtung nach Anspruch 13, **dadurch gekennzeichnet, dass** konzentrisch zwischen der Abtriebseinheit (38) und dem Lagerring (44) mit sowohl der Abtriebseinheit (38) als auch dem Lagerring (44) kooperierende Lagermittel (62) vorhanden sind, die zweckmäßigerweise eine Mehrzahl von Wälzlagerelementen (63) enthalten.

15. Drehantriebsvorrichtung nach einem der Ansprüche 1 bis 14, **dadurch gekennzeichnet, dass** die Abtriebseinheit (38) einen von dem Lagerring (44) konzentrisch umschlossenen und mit mindestens einer Befestigungsschnittstelle (42) ausgestatteten Abtriebsteller (46) und eine insbesondere einstückig mit dem Abtriebsteller (46) verbundene, den Abtriebszahnkranz (48) tragende Abtriebswelle (47) aufweist, wobei der Abtriebszahnkranz (48) zweckmäßigerweise einstückig mit der Abtriebswelle (47) verbunden ist.

16. Drehantriebsvorrichtung nach einem der Ansprüche 1 bis 15, **dadurch gekennzeichnet, dass** jede Antriebseinheit (24a, 24b) zwei axial zueinander beabstandete und abdichtend gleitverschieblich an der Wandung des zugeordneten, als Antriebsraum ausgebildeten länglichen Raumes (15a, 15b) anliegende Kopfabschnitte (25, 26) und einen sich zwischen den beiden Kopfabschnitten (25, 26) erstreckenden, die Antriebsverzahnung (28) aufweisenden Zahnstangenabschnitt (27) aufweist.

## Claims

1. Fluid-actuated rotary drive unit with a drive housing (2) extending along a main axis (3) and in which are arranged two adjacent elongated spaces (15a, 15b), separated from one another by a partition wall (17) and with longitudinal axes (16a, 16b) parallel to the main axis (3), at least one of which forms a drive chamber in which is mounted a drive unit (24a, 24b) capable of linear movement through controlled fluidic pressurisation and having a drive gearing (28) on its long side facing the partition wall (17), and with an output unit (38), rotatable relative to the drive housing (2) around a rotation axis (45) at right-angles to the main axis (3), which has an output gear rim (48) in geared engagement inside the drive housing (2) with the drive gearing (28) of the drive unit or units (24a, 24b) and which is rotatably mounted on a bearing ring (44) which encompasses it and which is attached, with a mounting face (56) leading, to a first outer surface (7) of the drive housing (2) oriented in the axial direction of the rotation axis (45) and is clamped to the drive housing (2) by at least one mounting bolt (57, 58), **characterised in that** the mounting bolt or bolts (57, 58) reaches or reach through the drive housing (2) solely in the area of the partition wall (17), outside both elongated spaces (15a, 15b), from a second outer surface (8) of the drive housing (2) opposite the first outer surface (7), wherein it or they rest on the drive housing (2) with a bolt head (72) from the side opposite the first outer surface (7) and is or are screwed into a tapped hole (74) of the bearing ring (44), open towards the mounting face (56), with a threaded shank (73) from the mounting face (56).

2. Rotary drive unit according to claim 1, **characterised in that** each of the two elongated spaces (15a, 15b) forms a drive chamber in which is mounted a drive unit (24a, 24b) capable of linear movement through controlled fluidic pressurisation and having a drive gearing (28) on its long side facing the partition wall (17), wherein both drive units (24a, 24b) are in geared engagement with the output gear rim (48).

3. Rotary drive unit according to claim 1 or 2, **characterised in that** the mounting bolt or bolts (57, 58) passes or pass through the partition wall (17) in a direction parallel to the rotation axis (45).

4. Rotary drive unit according to any of claims 1 to 3, **characterised in that** the bearing ring (44) is screwed in place by two mounting bolts (57, 58) spaced apart in the axial direction of the main axis (3), and provided on diametrically opposite sides of the output gear rim (48).

5. Rotary drive unit according to any of claims 1 to 4, **characterised in that** each mounting bolt (57, 58) reaches through an individual bolt seating channel (75) passing through the drive housing (2) in the axial direction of the rotation axis (45).

6. Rotary drive unit according to any of claims 1 to 5, **characterised in that** the bolt head (72) of each mounting bolt (57, 58) is held completely recessed in the drive housing (2).

7. Rotary drive unit according to any of claims 1 to 6, **characterised in that** each tapped hole (74) cooperating with the threaded shank (73) of a mounting bolt (57, 58) is in the form of a blind hole closed at the outer end face (77) of the bearing ring (44) opposite the mounting face (56).

8. Rotary drive unit according to any of claims 1 to 7, **characterised in that** the bearing ring (44) has no openings at all on its outer end face (77) opposite the mounting face (56).

9. Rotary drive unit according to any of claims 1 to 8, **characterised in that** the bearing ring (44) is accommodated with at least a portion of its height in a centring recess (66) of the drive housing (2) formed in the area of the first outer surface (7) of the drive housing (2), and has all-round support from the peripheral side wall (68) of this centring recess (66) at right-angles to the axial direction of the rotation axis (45).

10. Rotary drive unit according to claim 9, **characterised in that** the bearing ring (44) has a circular-cylindrical outer peripheral surface (78), at least **in that** part of it which dips into the centring recess (66), and the centring recess (66) has an inside contour which is complementary thereto.

11. Rotary drive unit according to claim 9 or 10, **characterised in that** the bearing ring (44) has in the area of its radially outwards oriented outer peripheral surface (78) at least one locating slot (79) for accommodating a seal ring (83) which makes sealing cooperation with the side wall (68) of the centring recess (66).

12. Rotary drive unit according to any of claims 9 to 11, **characterised in that** the centring recess (66) has a base (67) oriented in the axial direction of the rotation axis (45) and on which the bearing ring (44) makes contact with its mounting face (56) and at which the mounting bolt or bolts (57, 58) come out of the drive housing (2).

13. Rotary drive unit according to any of claims 1 to 12, **characterised in that** the output unit (38) and the bearing ring (44) are joined together to form a self-supporting output sub-assembly (64), wherein the output unit (38) is expediently fixed, axially immovable relative to the drive housing (2), solely by the bearing ring (44) clamped to the drive housing (2).

14. Rotary drive unit according to claim 13, **characterised in that** bearing means (62) cooperating with both the output unit (38) and the bearing ring (44) are provided concentrically between the output unit (38) and the bearing ring (44), and expediently contain a multiplicity of roller bearing elements (63).

15. Rotary drive unit according to any of claims 1 to 14, **characterised in that** the output unit (38) has an output disc (46) concentrically encompassed by the bearing ring (44) and equipped with at least one mounting interface (42), and an output shaft (47), in particular integral with the output disc (46) and carrying the output gear rim (48), wherein the output gear rim (48) is expediently integral with the output shaft (47).

16. Rotary drive unit according to any of claims 1 to 15, **characterised in that** each drive unit (24a, 24b) has two head sections (25, 26) spaced axially apart from one another and in sealing, sliding contact with the wall of the assigned elongated space (15a, 15b) designed as drive chamber, and a gear rack section (27) with the drive gearing (28) extending between the two head sections (25, 26).

## Revendications

1. Dispositif d'entraînement rotatif fluidique, comprenant un boîtier d'entraînement (2) s'étendant le long d'un axe principal (3), dans lequel sont disposés l'un à côté de l'autre deux espaces allongés (15a, 15b) séparés l'un de l'autre par une cloison intermédiaire (17) et présentant des axes longitudinaux (16a, 16b) parallèles par rapport à l'axe principal (3), dont l'un au moins forme un espace d'entraînement, dans lequel est disposée une unité d'entraînement (24a, 24b) pouvant être déplacée de manière linéaire sous l'action commandée d'un fluide et présentant au niveau de son côté longitudinal tourné vers la paroi intermédiaire (17) une denture d'entraînement (28), et comprenant une unité de sortie (38) pouvant être tournée autour d'un axe de rotation (45) perpendiculaire à l'axe principal (3) par rapport au boîtier d'entraînement (2), laquelle unité de sortie présente une couronne dentée de sortie (48) se trouvant en prise d'engrènement à l'intérieur du boîtier d'entraînement (2) avec la denture d'entraînement (28) de ladite au moins une unité d'entraînement (24a, 24b) et qui est logée de manière à pouvoir tourner au niveau d'une bague de palier (44) l'entourant, laquelle bague de palier est placée avec une surface de montage (56) au niveau d'une surface extérieure (7) du boîtier d'entraînement (2) orientée dans la direction axiale de l'axe de rotation (45) et qui est serrée au boîtier d'entraînement (2) par au moins une vis de fixation (57, 58), **caractérisé en ce que** ladite au moins une vis de fixation (57, 58) traverse ledit boîtier d'entraînement (2) seulement dans la zone de la paroi intermédiaire (17), en dehors des deux espaces allongés (15a, 15b) allongés depuis une deuxième surface extérieure (8), opposée à la première surface extérieure (7), du boîtier d'entraînement (2), sachant que ladite au moins une vis de fixation s'appuie par une tête de vis (72) depuis le côté opposé à la première surface extérieure (7) au niveau du boîtier d'entraînement (2) et est vissée avec une tige filetée (73) depuis la surface de montage (56) dans un alésage fileté (74) de la bague de palier (44) ouvert en direction de la surface de montage (56).

2. Dispositif d'entraînement rotatif selon la revendication 1, **caractérisé en ce que** chacun des deux espaces allongés (15a, 15b) forme un espace d'entraînement, dans lequel est disposée une unité d'entraînement (24a, 24b) pouvant être déplacée de manière linéaire sous l'action commandée d'un fluide, laquelle unité d'entraînement présente une denture d'entraînement (28) au niveau de son côté longitudinal tourné vers la paroi intermédiaire (17), sachant que les deux unités d'entraînement (24a, 24b) se trouvent en prise par engrènement avec la couronne dentée de sortie (48).

3. Dispositif d'entraînement rotatif selon la revendication 1 ou 2, **caractérisé en ce que** ladite au moins une vis de fixation (57, 58) traverse la paroi intermédiaire (17) dans une direction parallèle à l'axe de rotation (45).

4. Dispositif d'entraînement rotatif selon l'une quelconque des revendications 1 à 3, **caractérisé en ce que** la bague de palier (44) est vissée avec deux vis de fixation (57, 58) espacées l'une de l'autre dans la direction axiale de l'axe principal (3), lesquelles vis de fixation sont disposées sur des côtés de la couronne dentée de sortie (48), opposés diamétralement les uns aux autres.

5. Dispositif d'entraînement rotatif selon l'une quelconque des revendications 1 à 4, **caractérisé en ce que** chaque vis de fixation (57, 58) traverse un canal de réception de vis (75) individuel traversant le boîtier d'entraînement (2) dans la direction axiale de l'axe de rotation (45).

6. Dispositif d'entraînement rotatif selon l'une quelconque des revendications 1 à 5, **caractérisé en ce que** la tête de vis (72) de chaque vis de fixation (57, 58) est logée de manière complètement abaissée dans le boîtier d'entraînement (2).

7. Dispositif d'entraînement rotatif selon l'une quelconque des revendications 1 à 6, **caractérisé en ce que** chaque alésage fileté (74) coopérant avec la tige filetée (73) d'une vis de fixation (57, 58) se présente sous la forme d'un trou borgne fermé au niveau de la surface frontale (77), extérieure opposée à la surface de montage (56), de la bague de palier (44).

8. Dispositif d'entraînement rotatif selon l'une quelconque des revendications 1 à 7, **caractérisé en ce que** la bague de palier (44) est réalisée sans ouverture traversante au niveau de sa surface frontale (77) extérieure opposée à la surface de montage (56).

9. Dispositif d'entraînement rotatif selon l'une quelconque des revendications 1 à 8, **caractérisé en ce que** la bague de palier (44) est logée avec au moins une partie de sa hauteur dans un évidement de centrage (66) du boîtier d'entraînement (2), réalisé dans la zone de la première surface extérieure (7) du boîtier d'entraînement (2) et s'appuie de tous les côtés par la paroi latérale (68) périphérique dudit évidement de centrage (66) de manière transversale par rapport à la direction axiale de l'axe de rotation (45).

10. Dispositif d'entraînement rotatif selon la revendication 9, **caractérisé en ce que** la bague de palier (44) comprend dans au moins sa zone plongeant dans l'évidement de centrage (66) une surface périphérique extérieure (78) cylindrique circulaire, et **en ce que** l'évidement de centrage (66) dispose d'un contour intérieur complémentaire par rapport à ladite surface périphérique extérieure.

11. Dispositif d'entraînement rotatif selon la revendication 9 ou 10, **caractérisé en ce que** la bague de palier (44) présente dans la zone de sa surface périphérique extérieure (78) orientée radialement vers l'extérieur au moins une rainure de logement (79) servant à loger une bague d'étanchéité (83) coopérant de manière étanche avec la paroi latérale (68) de l'évidement de centrage (66).

12. Dispositif d'entraînement rotatif selon l'une quelconque des revendications 9 à 11, **caractérisé en ce que** le logement de centrage (66) présente une surface de base (67) orientée dans la direction axiale de l'axe de rotation (45), contre laquelle repose la bague de palier (44) par sa surface de montage (56) et au niveau de laquelle ladite au moins une vis de fixation (57, 58) sort du boîtier d'entraînement (2).

13. Dispositif d'entraînement rotatif selon l'une quelconque des revendications 1 à 12, **caractérisé en ce que** l'unité de sortie (38) et la bague de palier (44) sont rassemblées pour former un module de sortie (64) autoporteur, sachant que l'unité de sortie (38) est fixée de manière appropriée seulement par la bague de palier (44) serrée au boîtier d'entraînement (2) de manière immobile axialement par rapport au boîtier d'entraînement (2).

14. Dispositif d'entraînement rotatif selon la revendication 13, **caractérisé en ce que** sont présents de manière concentrique entre l'unité de sortie (38) et la bague de palier (44) des moyens de support (62) coopérant aussi bien avec l'unité de sortie (38) qu'avec la bague de palier (44), lesquels comprennent de manière appropriée une pluralité d'éléments de palier à roulement (63).

15. Dispositif d'entraînement rotatif selon l'une quelconque des revendications 1 à 14, **caractérisé en ce que** l'unité de sortie (38) présente un vérin de sortie (46) entouré de manière concentrique par la bague de palier (44) et équipé d'au moins une interface de fixation (42) et un arbre de sortie (47) relié en particulier d'un seul tenant au vérin de sortie (46), supportant la couronne dentée de sortie (48), sachant que la couronne dentée de sortie (48) est reliée de manière appropriée d'un seul tenant à l'arbre de sortie (47).

16. Dispositif d'entraînement rotatif selon l'une quelconque des revendications 1 à 15, **caractérisé en ce que** chaque unité d'entraînement (24a, 24b) présente deux sections de tête (25, 26) espacées axialement l'une de l'autre et reposant de manière étanche et de manière à pouvoir se déplacer par glissement au niveau de la paroi de l'espace allongé (15a, 15b) associé et se présentant sous la forme d'un espace d'entraînement et une section de crémaillère (27) présentant la denture d'entraînement (28) et s'étendant entre les deux sections de tête (25, 26).
